# EUROPÄISCHE PATENTSCHRIFT

(11) **EP 1 416 027 B1**
(45) Veröffentlichungstag und Bekanntmachung des Hinweises auf die Patenterteilung: **17.04.2013**
(21) Anmeldenummer: 03024643.3
(22) Anmeldetag: 27.10.2003
(51) Int. Cl.: C09K 5/06, F28D 20/02

(54) **Mischungen für Wärmespeicher**
Mixtures for heat accumulators
Mélanges pour accumulateurs de chaleur

(30) Priorität: 28.10.2002 DE 10250249
(43) Veröffentlichungstag der Anmeldung: 06.05.2004
(73) Patentinhaber: SGL Carbon SE, 65201 Wiesbaden (DE)
(72) Erfinder: Öttinger, Oswin, Dr., 86405 Meitingen (DE); Bacher, Jürgen, 86637 Wertingen/Reatshofen (DE)

(56) Entgegenhaltungen:
- CH-A- 636 119
- DE-A- 19 630 073
- US-A- 5 882 570
- US-A1- 2002 016 505
- XIAO M ET AL: "Preparation and performance of shape stabilized phase change thermal storage materials with high thermal conductivity" ENERGY CONVERSION AND MANAGEMENT, ELSEVIER SCIENCE PUBLISHERS, OXFORD, GB, Bd. 43, Nr. 1, Januar 2002 (2002-01), Seiten 103-108, XP004311361 ISSN: 0196-8904

## Beschreibung

Die Erfindung betrifft Mischungen aus einem Phasenwechselmaterial und partikelförmigem expandiertem Graphit, Wärmespeicher enthaltend derartige Mischungen sowie Verfahren zu deren Herstellung.

Phasenwechselmaterialien (englisch "phase change materials", PCM) sind geeignet zur Speicherung von Wärmeenergie in Form von latenter Wärme. Unter Phasenwechselmaterialien werden solche Stoffe verstanden, die bei Zu- oder Abfuhr von Wärme bei einer gegebenen Temperatur einer Phasenumwandlung unterliegen, z. B. von der festen in die flüssige Phase (Schmelzen) oder von der flüssigen in die feste Phase (Erstarren), wie das Paar Eis und Wasser bei dessen Gefrierpunkt. Bevorzugt sind ihre volumenbezogenen Umwandlungsenthalpien bei der betreffenden Temperatur über 100 KJ/dm³. Aus der DE-A 100 18 938 sind auch Phasenwechselmaterialien bekannt, die eine Phasenumwandlung ohne Änderung des Aggregatzustandes durchlaufen, speziell einen Übergang zwischen einer festen Tieftemperatur- und einer festen Hochtemperaturmodifikation. Wird einem Phasenwechselmaterial Wärme zugeführt bzw. entzogen, so bleibt seine Temperatur bei Erreichen der Phasenumwandlungspunktes so lange konstant, bis das Material vollständig in die andere Modifikation umgewandelt ist. Die während der Phasenumwandlung eingespeiste bzw. abgeführte Wärme, die keine Temperaturänderung des Materials bewirkt, wird als latente Wärme (Umwandlungsenthalpie) bezeichnet, während eingespeiste oder abgeführte Wärme, die in dem Material eine Temperaturänderung hervorruft, als fühlbare Wärme bezeichnet wird.

Die Speicherung von Wärme als latente Wärme in einem Phasenwechselmaterial ist aus den folgenden Gründen vorteilhaft: durch kleine Temperaturänderungen (in der Nähe der Phasenumwandlungstemperatur) lassen sich große Wärmemengen speichern, die über längere Zeit konstante Temperatur beim Phasenwechsel erlaubt die Glättung von Temperaturschwankungen bei der Umwandlungstemperatur des betreffenden Phasenwechselmaterials, und es treten nur geringe Wärmeverluste an die Umgebung im Vergleich zur Speicherung von fühlbarer Wärme auf, da hier durch die Erwärmung des Speichermediums die Temperaturdifferenz zur Umgebung kontinuierlich ansteigt.

Nachteilig für die praktische Anwendung von Phasenwechselmaterialien in Wärmespeichern ("Latentwärmespeicher") ist die üblicherweise geringe thermische Leitfähigkeit dieser Materialien. Dadurch verläuft die Be- und Entladung dieser Wärmespeicher relativ langsam.

Die Be- und Entladezeit von Latentwärmespeichern läßt sich verringern, wenn das Phasenwechselmaterial in einen porösen Körper eingebracht wird, der eine Matrix aus einem Material mit hoher Wärmeleitfähigkeit enthält. Beispielsweise wurde in der DE-A 196 30 073 vorgeschlagen, eine poröse Matrix aus Graphit im Vakuum mit einem in flüssiger Phase vorliegenden "fest-flüssig" Phasenwechselmaterial zu imprägnieren. Ein solcher Latentwärmespeicher fällt nach der vom VDI vorgeschlagenen Terminologie für Verbundwerkstoffe in die Gruppe der "Durchdringungs-Verbundwerkstoffe" (Lexikon Werkstofftechnik, Hrsg. H. Gräfen; VDI Verlag Düsseldorf 1993).

Die Imprägnierung kann durch Tauchen des porösen Körpers in ein flüssiges Phasenwechselmaterial, durch Anlegen von Unterdruck an den porösen Körper und anschließendes Entspannen oder Anlegen von Überdruck im Kontakt mit dem Phasenwechselmaterial erfolgen, nachstehend als Tauch-, Vakuum- oder Vakuum-Druckverfahren bezeichnet. Das einfache Tauchverfahren kann nur dann angewendet werden, wenn das Phasenwechselmaterial die Matrix des porösen Körpers benetzt. Vakuum- bzw. Vakuum-Druckimprägnierung müssen angewandt werden, wenn das Phasenwechselmaterial die Matrix des porösen Körpers nicht oder kaum benetzt.

Die Herstellung von Latentwärmespeichern mit erhöhter Wärmeleitfähigkeit durch Einbringen eines Phasenwechselmaterials mittels Imprägnieren in eine wärmeleitende Matrix hat jedoch signifikante Nachteile: für den Imprägniervorgang muß das Phasenwechselmaterial in flüssiger Phase vorliegen, ein Zusatz von festen Hilfsstoffen wie beispielsweise Keimbildnern ist kaum möglich, für die Imprägnierung mit Phasenwechselmaterialien, welche die Matrix wenig benetzen, ist ein hoher zeitlicher und apparativer Aufwand notwendig, oder die Herstellung eines Verbundes mit hinreichend hohem Gehalt an Phasenwechselmaterial und niedrigem Porenanteil ist nicht möglich, bei einigen Phasenwechselmaterialien, beispielsweise Salzhydraten, kann sich beim Anlegen eines Unterdrucks die Zusammensetzung ändern, so daß sie als Latentwärmespeichermaterial unbrauchbar werden, und die Formgebung des Latentwärmespeichers ist auf solche Formen beschränkt, in denen der poröse Körper, der die Matrix bildet, hergestellt werden kann.

In der veröffentlichten Patentanmeldung US-A1 2002 0016505 wurde vorgeschlagen, dem Phasenwechselmaterial ein Hilfsmittel zuzusetzen, das eine hohe thermische Leitfähigkeit aufweist, beispielsweise Metallpulver, Metallgranulat oder Graphitpulver. Speziell ist im Beispiel 2 der genannten Patentanmeldung beschrieben, daß 2 g Didodecylammoniumchlorid als Phasenwechselmaterial mit 2 g synthetischem Graphit KS6 gemeinsam vermahlen und zu einem Formkörper verpreßt werden. Die Vorteile dieser Verfahrensweise bestehen in der variablen Formgebung durch wirtschaftliche, großtechnisch anwendbare Kompaktierungsverfahren, z. B. Tablettieren oder Extrudieren, und der Möglichkeit der Verarbeitung von festen Phasenwechselmaterialien und von Phasenwechselmaterialien mit festen Zusätzen, z. B. Keimbildnern. Alternativ ist die Anwendung als Schüttung in einen mit Wärmetauscherprofilen durchsetzten Latentwärmespeicherbehälter möglich.

Ein Latentwärmespeichermaterial gemäß US-A1 2002 0 016 505 wäre entsprechend der vom VDI vorgeschlagenen Terminologie als Teilchenverbundwerkstoff anzusehen, in einer Komponente sind nämlich diskrete Partikel einer anderen Komponente eingelagert.

Im Gegensatz zu der in der DE-A 196 30 073 beschriebenen mit dem Phasenwechselmaterial imprägnierten Graphitmatrix bilden in Gemischen mit Phasenwechselmaterialien die Partikel des wärmeleitenden Hilfsmittels jedoch nicht notwendig ein das Phasenwechselmaterial einschließendes leitfähiges Gerüst. Daher ist im letzteren Fall die Wärmeleitfähigkeit des Latentwärmespeichermaterials zwangsläufig geringer. Ein erheblicher Nachteil bei der Verwendung von Metallspänen oder synthetischem Graphitpulver als wärmeleitenden Hilfsmitteln besteht deshalb darin, daß für eine signifikante Steigerung der Wärmeleitfähigkeit des Latentwännespeichermaterials relativ hohe Anteile des wärmeleitenden Hilfsmittels notwendig sind (vgl. das oben aufgeführte Beispiel aus US-AI 2002 0 016 505). Dadurch verringert sich die Energiedichte des Latentwärmespeichers.

In der Publikation ,,Preparation and performance of shape stabilized phase change thermal storage materials with high thermal conductivity" von Min Xiao et al. (ENERGY CONVERSION AND MANAGEMENT; ELSEVIER SCIENCE PUBLISHERS, OXFORD; GB, Bd 43, nr. 1, Januar 2002 (2002-01), Seiten 103.108) wird ein formstabilisiertes Phasenwechselmaterial, insbesondere Paraffin, besprochen. Die Formstabilisierung wird durch den Zusatz von Styren-Budatien-Styren-Copolymer erzielt. Das Polymer wirkt als Trägergerüst für das Paraffin, ein Schmelzen als Phasenübergang findet innerhalb der Polymergerüsts statt.

Die US 5 882 570 A beschreibt ein Material, das zumindest ein Phasenwechselmaterial enthält. Dabei kann ein Graphitschaum-Material zum Einsatz kommen, das für die Hochtemperatur-Isolation eingesetzt werden soll.

In CH 636 119 A wird eine feine Suspension oder Emulsion mit einem Phasenwechselmaterial beschrieben.

Die Aufgabe der vorliegenden Erfindung besteht daher darin, ein Latentwärmespeichermaterial mit hoher Speicherkapazität auf der Basis eines Phasenwechselmaterials bereitzustellen, welches eine erhöhte Wärmeleitfähigkeit aufweist, so daß eine schnellere Be-und Entladung des Latentwärmespeichers möglich ist, und welches ohne die Nachteile des Imprägnierverfahrens herstellbar ist. Diese Aufgabe wird erfindungsgemäß gelöst durch Mischungen mit den Merkmalen des Anspruchs 1, welche ein Phasenwechselmaterial und partikelförmigen expandierten Graphit enthalten und dadurch gekennzeichnet sind, daß sie Volumenanteile von 5 bis 40 % an expandiertem Graphit enthalten, wobei die Partikel einen mittleren Teilchendurchmesser von 5 µm bis 5 mm aufweisen und aus zerkleinertem verdichtetem Graphitexpandat mit einer Schüttdichte von 60 bis 200 g/l bestehen. Überraschend hat sich gezeigt, daß schon mit relativ geringen Volumenanteilen an Partikeln von expandiertem Graphit eine signifikante Steigerung der Wärmeleitfähigkeit des Wärmespeichermaterials erzielt werden kann. Der Anstieg der Wärmeleitfähigkeit eines Wärmespeichermaterials mit expandiertem Graphit in Partikelform als wärmeleitendem Hilfsmittel ist überraschenderweise um ein Vielfaches höher als der Anstieg der Wärmeleitfähigkeit eines Phasenwechselmaterials mit einem entsprechenden Volumenanteil synthetischen Graphits.

Die Erfindung betrifft daher Mischungen enthaltend ein Phasenwechselmaterial und partikelfönnigen expandierten Graphit, die Volumenanteile von 5 bis 40 % an expandiertem Graphit enthalten, wobei die Partikel einen mittleren Teilchendurchmesser von 5 µm bis 5 mm aufweisen und aus zerkleinertem verdichtetem Graphitexpandat mit einer Schüttdichte von 60 bis 200 g/l bestehen

Die Herstellung von expandiertem Graphit und Produkten aus expandiertem Graphit ist bekannt aus der US-A 3 404 061. Für die Herstellung von expandiertem Graphit werden Graphiteinlagerungsverbindungen oder Graphitsalze, z.B. Graphithydrogensulfat oder Graphitnitrat, schockartig erhitzt. Das dabei entstehende sogenannte Graphitexpandat besteht aus wurm- oder ziehharmonikaförmigen Aggregaten. Die Schüttdichte von Graphitexpandat liegt im Bereich von 2 bis 20 g/l, vorzugsweise von 2 bis 7 g/l.

Durch Verdichten dieses Graphitexpandats unter Druck können ohne Binderzusatz selbsttragende Graphitfolien oder -platten hergestellt werden, die derzeit vor allem als Dichtungsmatetial Anwendung finden. Zerkleinert man solches verdichtetes oder "vorverdich-Graphitexpandat mit Hilfe von Schneid-, Prall- und/oder Strahlmühlen, dann erhält man je nach Zerkleinerungsgrad ein Pulver oder Häcksel aus vorverdichtetem Graphitexpandat. Die Schüttdichte der so hergestellten Pulver liegt typischerweise im Bereich von 60 bis 200 g/l. Diese Pulver lassen sich fein verteilt und homogen in Preßmassen einmischen.

Im Rahmen der Beschreibung der vorliegenden Erfindung wird der Begriff "expandierter Graphit" zusammenfassend gebraucht für (i) Graphitexpandat, (ii) durch Zerkleinern von verdichtetem Graphitexpandat erhaltene Pulver bzw. Häcksel, (iii) durch Zerkleinern von Graphitexpandat gewonnenes Pulver, und (iv) durch Reexpandieren von zerkleinertem verdichtetem Graphitexpandat hergestelltes Reexpandat. Dabei hat das Graphitexpandat eine Schüttdichte von 2 bis 20 g/l, das zerkleinerte Graphitexpandat hat eine Schüttdichte von 20 bis 150 g/l, das zerkleinerte verdichtete Graphitexpandat eine Schüttdichte von 60 bis 200 g/l, und das reexpandierte verdichtete Graphitexpandat eine Schüttdichte von 20 bis 150 g/l.

Gemäß der vorliegenden Erfindung wird die Form (ii) verwendet, d.h. zerkleinertes verdichtetes Graphitexpandat mit einer Schüttdichte von 60 bis 200 g/l.

In den erfindungsgemäßen Wärmespeichern können alle Phasenwechselmaterialien eingesetzt werden, die sich im Einsatztemperaturbereich gegenüber expandiertem Graphit inert verhalten.

Geeignete Phasenwechselmaterialien sind insbesondere solche mit einer Phasenumwandlungstemperatur im Bereich von - 100 °C bis + 500 °C, beispielsweise Paraffine, Zuckeralkohole, Gashydrate, Wasser, wäßrige Salzlösungen, Salz-Wasser-Eutektika, Salzhydrate und deren Mischungen, Salze und deren eutektische Mischungen, Alkalimetall-Hydroxide sowie Mischungen aus Salzen und Alkalimetall-Hydroxiden. Die Auswahl des Phasenwechselmaterials erfolgt entsprechend dem Temperaturbereich, in dem der Latentwärmespeicher eingesetzt wird. Dem Phasenwechselmaterial werden bei Bedarf Hilfsstoffe zugesetzt, z.B. Keimbildner, um eine Unterkühlung beim Erstarrungsprozeß zu verhindern.

Die Vorteile der erfindungsgemäßen Wärmespeicher enthaltend expandierten Graphit im Vergleich zu einem Wärmespeicher mit einem gleichen Volumenanteil an synthetischem Graphit läßt sich unter anderem auf die Besonderheiten der Beschaffenheit, Struktur und Morphologie des expandierten Graphits zurückführen. Die Erfindung ist jedoch nicht an diese Erklärung gebunden.

Die Kristallstruktur des expandierten Graphits entspricht weit mehr der idealen Graphit-Schichtebenenstruktur als die Struktur in den eher isotropen Partikeln gebräuchlicher synthetischer Graphite, daher ist die Wärmeleitfähigkeit des expandierten Graphits höher. Weitere Charakteristika des expandierten Graphits sind die Mikroporosität und das hohe Aspektverhältnis der Partikel.

Aufgrund der Mikroporosität und der Form der Partikel ist die spezifische Oberfläche (nach der BET-Methode) von expandiertem Graphit größer als die nach derselben Methode ermittelte spezifische Oberfläche von synthetischem Graphit mit vergleichbarer Partikelgröße. Beispielsweise hat der in Beispiel 2 der US-A 20002 0 016 505 verwendete synthetische Graphit KS6 der Firma Timcal eine spezifische Oberfläche von 20 m²/g bei einem Anteil von über 90 % an Partikeln, deren (mittlerer) Durchmesser kleiner als 6 µm ist. Bei expandiertem Graphit mit einer mittleren Partikelgröße von ca. 5 µm beträgt die spezifische Oberfläche nach der BET-Methode typischerweise zwischen 25 und 40 m²/g. Mit zunehmendem Durchmesser der Teilchen nimmt die BET-Oberfläche des expandierten Graphits zwar ab, bleibt jedoch weiterhin auf einem relativ hohen Niveau. So weist expandierter Graphit mit einer mittleren Partikelgröße von 5 mm immer noch eine BET-Oberfläche

Oberfläche von mehr als 10 m²/g auf. Für die Herstellung eines erfindungsgemäßen Wärmespeichers wird expandierter Graphit in Form von zerkleinertem verdichtetem Graphitexpandat mit mittleren Partikelgrößen im Bereich von 5 µm bis 5 mm und bevorzugt im Bereich von 50 µm bis 1 mm eingesetzt.

Durch die hohe spezifische Oberfläche des expandierten Graphits in den erfmdungsgemäßen Wärmespeichern vergrößert sich die verfügbare Fläche für den Wärmeübergang zwischen Phasenwechselmaterial und darin eingelagertem wärmeleitendem Hilfsmittel. Weiterhin hat die poröse Oberfläche der expandierten Graphitpartikel den Vorteil, daß das Phasenwechselmaterial nach dem Übergang in den flüssigen Zustand in den Poren festgehalten wird, so daß kein Material aus dem Wärmespeicher auslaufen kann.

Die poröse Struktur des expandierten Graphits bewirkt zusätzlich, daß das Phasenwechselmaterial im Verbund mit expandiertem Graphit in einem Zustand ähnlich einer Verkapselung vorliegt. Dadurch werden makroskopische Entmischungsvorgänge (Seigerung) innerhalb des Phasenwechselmaterials weitestgehend unterdrückt. In den erfindungsgemäßen Wärmespeichern können daher auch solche Phasenwechselmaterialien verwendet werden, die sonst aufgrund ihrer starken Neigung zu Entmischungsvorgängen nicht für den Einsatz in Latentwärmespeichern geeignet sind.

Materialien für Wärmespeicher, denen als wärmeleitendes Hilfsmittel Partikel (Pulver oder Häcksel) aus zerkleinerter Graphitfolie zugesetzt wurden, weisen Wärmeleitfähigkeiten in gleicher Größenordnung auf wie Latentwärmespeichermaterialien mit einem entsprechenden Volumenanteil aus nicht kompaktiertem Graphitexpandat. Der Einsatz zerkleinerter Graphitfolie als wärmeleitendes Hilfsmittel in Wärmespeichern ist ökonomisch besonders vorteilhaft, da auf diese Weise Abfälle aus der Herstellung von Artikeln aus Graphitfolie, beispielsweise Dichtungen, genutzt werden können. Ein weiterer Vorteil der Pulver oder Häcksel aus zerkleinerter Graphitfolie besteht darin, daß sich diese Partikel im Vergleich zu Graphitexpandat leichter in das Phasenwechselmaterial einmischen lassen, denn sie sind weniger voluminös als Expandatpartikel.

Der Volumenanteil des expandierten Graphits in den erfindungsgemäßen Wärmespeichern liegt im Bereich von 5 bis 40 %, bevorzugt von 5 bis 20 % und besonders bevorzugt von 7 bis 15 %. Ein geringerer Volumenanteil an expandiertem Graphit ist wenig wirksam, weil dann die Graphitpartikel weitgehend voneinander isoliert sind. Außerdem reicht ein Volumenanteil von weniger als 5 % nicht aus, um den oben beschriebenen Effekt der Verkapselung zu erreichen und so Entmischungsvorgänge innerhalb des Phasenwechselmaterials zu verhindern. Bei einem höheren Volumenanteil an Graphit würde der Vorteil der gesteigerten Wärmeleitfähigkeit durch die Herabsetzung der Energiedichte des Speichers überkompensiert, denn die Erhöhung des Graphitanteils geht zu Lasten des Anteils des wärmespeichernden Phasenwechselmaterials.

Die Erfindung betrifft weiter ein Verfahren zur Herstellung der Mischungen von Phasenwechselmaterialien und expandiertem Graphit, die Formgebung dieser Mischungen und die Verarbeitung zu Wärmespeichern sowie deren Einsatzform.

In den als Wärmespeichermaterial eingesetzten erfindungsgemäßen Mischungen besteht ein inniger Verbund von Phasenwechselmaterial und darin eingelagerten expandiertem Graphit, so daß der Wärmeübergang zwischen beiden Materialien leicht möglich ist. Diese innige Mischung von Phasenwechselmaterial und expandiertem Graphit wird erreicht durch Mischen der Pulver der Bestandteile unter Anwendung geeigneter Mischverfahren, beispielsweise Rühren, Mischen in einem Pulvermischer, Kneten oder Walzen. Phasenwechselmaterialien mit einer fest-flüssig-Phasenumwandlung können auch im flüssigen (geschmolzenen) Zustand mit expandiertem Graphit gemischt werden. Die Mischungen weisen keine ohne technische Hilfsmittel erkennbaren Inhomogenitäten auf.

Die Vermischung von Phasenwechselmaterial und wärmeleitendem Hilfsmittel erfolgt besonders vorteilhaft mittels der aus der Kunststofftechnik zur Herstellung von Compounds bekannten Aufbereitungsverfahren, z.B. Kneten und nachfolgendes Granulieren. Besonders bevorzugt ist die Aufbereitung mittels eines Extruders, beispielsweise eines Doppelschneckenextruders. Der Vorteil dieses Verfahrens besteht darin, daß das Phasenwechselmaterial dabei aufgeschmolzen wird. Durch das kontinuierliche Einmischen des Graphits in die flüssige Phase des geschmolzenen Phasenwechselmaterials läßt sich eine größere Homogenität erreichen als bei einem Pulvermischverfahren. Insbesondere lassen sich so auch Phasenwechselmaterialien mit einem fest-flüssig-Übergang bei besonders hohen Umwandlungstemperaturen (300 °C bis 500 °C) innig mit dem expandierten Graphit vermischen.

Die erfindungsgemäßen Latentwärmespeichermaterialien können als Schüttung oder als Formkörper zum Einsatz kommen.

Aus dem erfindungsgemäßen Wärmespeichermaterial lassen sich durch Formgebungsverfahren unter Anwendung von Druck, die beispielsweise aus der Kunststofftechnik bekannt sind, wie Extrudieren, Pressen und Spritzgießen, Formkörper fertigen, die als Wärmespeicher dienen können. Pulvermischungen können beispielsweise durch Rütteln, Vibrationsformen und Pressen verdichtet werden. Entsprechend dem Herstellungsverfahren können diese Formkörper eine starke Anisotropie der Wärmeleitfähigkeit aufweisen. Diese Eigenschaft ist bei der konstruktiven Gestaltung des Formkörpers zu berücksichtigen. Der Formkörper wird bevorzugt so angeordnet, daß die Ausdehnung in der Richtung der höheren Wärmeleitfähigkeit in der Richtung des gewünschten Wärmeübergangs liegt, also zu einem Wärmetauscherprofil oder einem zu temperierenden Gegenstand hin orientiert ist. Für Anwendungen, in denen dies nicht realisierbar ist, kann alternativ eine Schüttung aus dem erfindungsgemäßem Latentwärmespeichermaterial verwendet werden, die in einen mit Wärmetauscherprofilen durchsetzten Latentwärmespeicherbehälter eingebracht wird. Für diese Variante der Anwendung wird das Latentwärmespeichermaterial als pulverförmiges Gemisch oder als rieselfähiges Granulat bereitgestellt.

Das erfindungsgemäße Verfahren zur Herstellung von Wärmespeichern erlaubt die Verwendung verschiedener Typen von Phasenwechselmaterialien. Der Phasenwechsel kann sowohl ein Übergang zwischen flüssiger und fester Phase als auch ein Übergang zwischen verschiedenen festen Phasen sein. Die Phasenumwandlungstemperaturen der für das erfindungsgemäße Latentwärmespeichermaterial geeigneten Phasenwechselmaterialien liegen im Bereich von -100 °C bis +500 °C. Bei Phasenumwandlungstemperaturen oberhalb 500 °C muß verstärkt dafür Sorge getragen werden, den Graphit gegen oxidativen Angriff durch Luftsauerstoff zu schützen.

Ein weiterer Vorteil des erfindungsgemäßen Verfahrens zur Herstellung von Wärmespeichern im Gegensatz zu dem in der DE-A 196 30 073 beschriebenen Infiltrationsverfahren besteht darin, daß dem Phasenwechselmaterial Keimbildner zugesetzt werden können, um eine Unterkühlung beim Erstarren zu verhindern. Der Volumenanteil des Keimbildners im Latentwärmespeichermaterial sollte 2 % nicht überschreiten, denn der Volumenanteil des Keimbildners geht auf Kosten des Volumenanteils des wärmespeichernden Phasenwechselmaterials. Deshalb sind Keimbildner nötig, die bereits in geringer Konzentration die Unterkühlung des Phasenwechselmaterials signifikant vermindern. Für das System Natriumacetat-Trihydrat geeignete Keimbildner sind beispielsweise Tetranatriumdiphosphat-Dekahydrat und Natriumhydrogenphosphat.

Die erfindungsgemäßen Wärmespeichermaterialien können in Wärmespeichern beispielsweise zur Thermostatisierung von Gebäuden, zur Klimatisierung von Fahrzeugen, zur Kühlung von elektronischen Bauteilen oder zur Speicherung von Solarwärme eingesetzt werden.

Weitere Merkmale, Einzelheiten und Vorzüge der Erfindung ergeben sich aus der folgenden detaillierten Beschreibung der Erfindung und den Ausführungsbeispielen. Die Erfindung wird nachstehend anhand von Beispielen erläutert.

### Beispiel 1

Kommerziell erhältliches Graphithydrogensulfat SS3 (Fa. Sumikin Chemical Co., Ltd; Tokyo, Japan) wurde schockartig auf 1000 °C erwärmt. Das so erhaltene Expandat hatte eine Schüttdichte von 3 bis 4 g/l. Ein Teil dieses Expandats wurde zu einer Graphitfolie mit einer Dichte von 1,0 g/cm³ verdichtet. Die Graphitfolie wurde mit einer Schneidmühle zerkleinert und die dabei erhaltenen Häcksel in einem weiteren Schritt mit einer Strahlmühle feiner zerkleinert. Eine Siebanalyse des so hergestellten expandierten Graphitpulvers zeigte, daß 50 % der Partikel des Pulvers kleiner als 180 µm und 95 % der Partikel kleiner als 600 µm waren. Die Schüttdichte des Pulvers lag im Bereich von 100 bis 120 g/l.

Anschließend wurden Mischungen des Phasenwechselmaterials Natriumacetat-Trihydrat (Fa. Merck, Darmstadt, Schmelzpunkt 58 °C, in Pulverform) mit einem Volumenanteil von 10 % Graphitexpandat nicht erfindungsgemäß bzw. 10 % des durch Mahlen von Graphitfolie erfindungsgemäßhergestellt. Expandierter Graphit und das pulverförmige Phasenwechselmaterial wurden mit einem Ankerrührer so lange vermengt, bis ohne technische Hilfsmittel keinerlei Inhomogenität sichtbar war. Die so erhaltenen Gemische wurde auf 50 °C vorgewärmt und unter einem Druck von 25 MPa zu zylindrischen Formkörpern von 90 mm Durchmesser und 10 mm Höhe verpreßt. Die Wärmeleitfähigkeit der so erhaltenen Latentwärmespeichermaterialien wurde parallel und senkrecht zur Preßrichtung gemessen. Bei der Messung der Wärmeleitfähigkeit lag das Phasenwechselmaterial im festen Zustand vor. Die Meßergebnisse sind in Tabelle 1 zusammengefaßt.

### Vergleichsbeispiel zu Beispiel 1 (nicht erfindungsgemäß)

Das Verfahren von Beispiel 1 wurde wiederholt, anstelle des Graphitexpandats bzw. des Pulvers aus zerkleinerter Graphitfolie wurden die synthetischen Graphite KS6 und KS 150 (Fa. Timcal, Schweiz) verwendet. Die mittlere Partikelgröße beträgt laut Herstellerangabe in KS6 3 bis 4 µm und in KS150 ca. 50 µm. In derselben Weise wie in Beispiel 1 wurden Mischungen des Phasenwechselmaterials Natriumacetat-Trihydrat mit einem Volumenanteil von 10 % KS6 bzw. 10 % KS 150 hergestellt und zu Formkörpern verpreßt. Zum weiteren Vergleich mit dem erfindungsgemäßen Latentwärmespeichermaterial wurde ebenfalls ein Formkörper aus dem reinen Phasenwechselmaterial Natriumacetat-Trihydrat hergestellt.

Die Wärmeleitfähigkeiten dieser Vergleichsmaterialien wurden wie in Beispiel 1 parallel und senkrecht zur Preßrichtung gemessen. Bei der Messung der Wärmeleitfähigkeit lag das Phasenwechselmaterial im festen Zustand vor. Die Meßergebnisse sind aus Tabelle 1 ersichtlich.

### Beispiel 2

Analog zu Beispiel 1 wurde eine Mischung aus Natriumacetat-Trihydrat, gemahlener Graphitfolie und Tetranatriumdiphosphat-Dekahydrat hergestellt und verpreßt. Die Volumenanteile der einzelnen Substanzen in der Mischung betrugen 89, 10 und 1 %.

Eine Probe der verpreßten homogenen Mischung wurde in einer DSC-Apparatur (TA Instruments) auf 70 °C erwärmt und danach wieder auf Raumtemperatur abgekühlt. Während dieses Temperaturzyklus wurde der Wärmefluß gemessen. Dieser Vorgang wurde mehrmals wiederholt. Die Aufheiz- und Abkühlgeschwindigkeit betrug 0,25 K/min. Zum Vergleich wurde eine Probe aus reinem Natriumacetat-Trihydrat mit dem gleichen Temperaturprogramm untersucht. Die Peaktemperaturen aus den DSC-Kurven sind in der Tabelle 2 angegeben.

Wie Tabelle 2 zeigt, erstarrte die Probe aus reinem Natriumacetat-Trihydrat beim Abkühlen nicht. Daher war auch im Verlauf des Aufheizsegments des folgenden Temperaturzyklus kein Peak, der dem Schmelzvorgang zugeordnet werden kann, sichtbar. Anders verhielt es sich bei der Mischung aus Natriumacetat-Trihydrat, gemahlener Graphitfolie und Tetranatriumdiphosphat-Dekahydrat. Hier zeigte die DSC-Kurve jeweils im Aufheizsegment einen durch den Schmelzvorgang hervorgerufenen und im Abkühlungssegment einen durch den Erstarrungsvorgang hervorgerufenen Peak. Die meßbare Unterkühlung lag bei dieser Probe im Bereich von 5 bis 7 K, während bei dem reinen Phasenwechselmaterial eine Unterkühlung von mehr als 30 K festgestellt wurde.

### Beispiel 3

Das Phasenwechselmaterial Paraffin RT50 (Fa. Rubitherm, Hamburg) mit einem Schmelzpunkt von 54,5 °C und ein Zusatz von gemahlenen Graphitfolienhäckseln wurden in einem Doppelschneckenextruder ZSK 50 (Fa. Werner und Pfleiderer) in der Schmelze vermischt und anschließend granuliert. Der Volumenanteil des Graphits im Granulat betrug 10 %. Die Vermischung erfolgte entsprechend den nachstehenden Parametern:

| | |
|---|---|
| Schneckendrehzahl | 97 min⁻¹ |
| Widerstand | 17 % |
| Austrittstemperatur | 66 °C |
| Materialdruck | 42 bar |
| Zulieferung Transportschnecke | 400 min⁻¹ |
| Temperaturzonen: (TC2 bis 10) | 40 / 41 / 61 / 61 / 61 / 50 / 47 / 40 / 40 °C |

Aus dem so erhaltenen Granulat-Material wurden mittels Spritzgußverfahren plattenförmige Probekörper hergestellt mit den Abmessungen 90 × 54 × 3 mm³. Der Anguß erfolgte in der Mitte der kürzeren Kantenflächen der Platte. Es wurde eine Spritzgießmaschine KM 65 der Fa. Krauss-Maffei mit einer Standardschnecke benutzt.

Beim Spritzgießen der Platten wurde entsprechend den folgenden Parametern verfahren:

| | |
|---|---|
| Einspritzgeschwindigkeit | 100 mm/s |
| Einspritzzeit | 0,52 s |
| Einspritzdruck | 500 bar |
| Nachdruck | 130 bar |
| Nachdruckzeit | 2 s |
| Kühltemperatur Platte | 24 bis 30 °C |
| Temperatur Einzug | 25 °C |
| Temperaturzonen (1 bis 5) | 40 / 45 / 50 / 50 / 50 °C |

Die Wärmeleitfähigkeit des Probekörpers betrug in der Plattenebene 4,4 ± 0,2 W/(m·K). In der Plattenebene ist die Wärmeleitfähigkeit unabhängig von der Orientierung (längs oder quer) bezüglich der Spritzrichtung. Senkrecht zur Plattenebene betrug die Wärmeleitfähigkeit 1,7 ± 0,1 W/(m·K). Die Wärmeleitfähigkeit des reinen Phasenwechselmaterials Paraffin RT 50 im festen Zustand ohne Zusatz wärmeleitender Hilfsmittel beträgt laut Herstellerangabe 0,2 W/(m·K).

Dieses Beispiel zeigt, daß bereits durch einen Volumenanteil von 10 % expandierten Graphits die Wärmeleitfähigkeit gegenüber dem reinen Phasenwechselmaterial je nach Richtung um einen Faktor von 10 bis 25 vergrößert werden kann.

**Tabelle 1**

| Wärmeleitfähigkeit der Proben des Beispiels 1 und des Vergleichsbeispiels zu Beispiel 1 | | | |
|---|---|---|---|
| Probenzusammensetzung | Verhältnis der prozentualen Volumenanteile von Phasenwechselmaterial und Graphit | Wärmeleitfähigkeit in W/(m.K) | |
| | | Senkrecht zur Preßrichtung | Parallel zur Preßrichtung |
| Natriumacetat-Trihydrat/ Graphitexpandat nicht erfindungsgemäß* | 90/10 | 9,1 ± 1 | 3,6 ± 1 |
| Natriumacetat-Trihydrat/ gemahlene Graphitfolie | 90/10 | 9,3 ± 1 | 5,3 ± 1 |
| Natriumacetat-Trihydrat/ KS6* | 90/10 | 1,6 ± 0,2 | 1,9 ± 0,2 |
| Natriumacetat-Trihydrat/ KS150* | 90/10 | 2,0 ± 0,2 | 1,6 ± 0,2 |
| Natriumacetat-Trihydrat* | 100/0 | 0,6 ± 0,1 | 0,6 ± 0,1 |

| | | | |
|---|---|---|---|
| * nicht erfindungsgemäß | | | |

| Tabelle 2 Schmelz- und Erstarrungstemperaturen | | |
|---|---|---|
| Probenzusammensetzung | Peaktemperaturen in °C | |
| | Aufheizsegment des Temperaturzyklus | Abkühlsegment des Temperaturzyklus |
| Natriumacetat-Trihydrat* | 57,85 | kein Peak |
| Natriumacetat-Trihydrat / Gemahlene Graphitfolie/ Tetranatriumdiphosphat-Dekahydrat | 57,84 | 50,69 |

| | | |
|---|---|---|
| * nicht erfindungsgemäß | | |

## Patentansprüche

1. Mischungen enthaltend ein Phasenwechselmaterial und partikelförmigen expandierten Graphit, **dadurch gekennzeichnet, daß** sie Volumenanteile von 5 bis 40 % an expandiertem Graphit enthalten, wobei die Partikel einen mittleren Teilchendurchmesser von 5 µm bis 5 mm aufweisen und aus zerkleinertem verdichtetem Graphitexpandat mit einer Schüttdichte von 60 bis 200 g/l bestehen.

2. Mischungen nach Anspruch 1, **dadurch gekennzeichnet, daß** sie zusätzlich einen Keimbildner für die Phasenumwandlung des Phasenwechselmaterials enthalten.

3. Mischungen nach Anspruch 2, **dadurch gekennzeichnet, daß** der Volumenanteil des Keimbildners in der Mischung maximal 2 % beträgt.

4. Mischungen nach Anspruch 1 enthaltend ein Phasenwechselmaterial mit einer Phasenumwandlungstemperatur im Bereich von -100°C bis +500°C aus der Gruppe umfassend Paraffine, Zuckeralkohole, Gashydrate, Wasser, wäßrige Salzlösungen, Salz-Wasser-Eutektika, Salzhydrate, Mischungen aus Salzhydraten, Salze und eutektische Mischungen von Salzen, Alkalimetall-Hydroxide sowie Mischungen aus Salzen und Alkalimetall-Hydroxiden.

5. Verfahren zur Herstellung von Wärmespeichern enthaltend Mischungen nach Anspruch 1, **dadurch gekennzeichnet, daß** expandierter Graphit und ein Phasenwechselmaterial vermischt werden und die Mischung unter Druck zu einem Formkörper geformt wird.

6. Verfahren nach Anspruch 5, **dadurch gekennzeichnet, daß** die Vermischung durch Mischen von expandiertem Graphit und einem Phasenwechselmaterial durch Mischen von Pulvern der Bestandteile erfolgt.

7. Verfahren nach Anspruch 5, **dadurch gekennzeichnet, daß** die Vermischung durch Aufschmelzen des Phasenwechselmaterials und Einmischen von expandiertem Graphit in dieser Schmelze erfolgt.

8. Verfahren nach Anspruch 5, **dadurch gekennzeichnet, dass** Formkörper mit anisotroper Wärmeleitfähigkeit durch Extrudieren, Vibrationsformen oder durch Spritzguss gebildet werden.

## Claims

1. Mixtures containing a phase change material and particulate expanded graphite, **characterized in that** they contain a proportion by volume of 5 to 40% expanded graphite, wherein the particles have an average diameter from 5 µm to 5 mm and consist of ground, compacted expanded graphite having a bulk density of 60 to 200 g/l.

2. The mixtures according to claim 1, **characterized in that** they additionally contain a nucleating agent for changing the phase of the phase change material.

3. The mixtures according to claim 2, **characterized in that** the proportion by volume of the nucleating agent in the mixture is not more than 2%,

4. The mixtures according to claim 1, containing a phase change material having a phase change temperature in the range from -100 °C to +500 °C from the group that includes paraffins, sugar alcohols, gas hydrates, water, aqueous salt solutions, salt-water eutectics, salt hydrates, mixtures of salt hydrates, salts and eutectic mixtures of salts, alkali metal hydroxides and mixtures of salts and alkali metal hydroxides.

5. A process for producing heat accumulators containing mixtures according to claim 1, **characterized in that** expanded graphite and a phase change material are mixed together and the mixture is moulded into a shaped body under pressure.

6. The process according to claim 5, **characterized in that** mixing is performed by mixing expanded graphite and a phase change material by mixing powders of the components.

7. The process according to claim 5, **characterized in that** mixing is performed by melting the phase change material and mixing expanded graphite into this molten mass.

8. The process according to claim 5, **characterized in that** shaped bodies having anisotropic thermal conductivity are formed by extruding, vibration moulding, or by injection moulding.

## Revendications

1. Mélanges contenant un matériau à changement de phase et du graphite expansé sous forme de particules, **caractérisés en ce qu'**ils contiennent ledit graphite expansé dans une proportion volumique comprise entre 5 et 40 %, les particules présentant un diamètre de particule moyen compris entre 5 µm et 5 mm et étant constituées de graphite expansé lequel a subi une compression et un broyage et lequel a une densité apparente comprise entre 60 et 200 g/l.

2. Mélanges selon la revendication 1, **caractérisés en ce qu'**ils contiennent en outre un agent de nucléation destiné à la transformation de phase du matériau à changement de phase.

3. Mélanges selon la revendication 2, **caractérisés en ce que** la proportion volumique de l'agent de nucléation dans ledit mélange est inférieure ou égale à 2 %.

4. Mélanges selon la revendication 1, contenant un matériau à changement de phase ayant une température de transformation de phase comprise entre -100 °C et +500 °C, choisi dans le groupe comprenant les paraffines, les polyols, les hydrates de gaz, l'eau, les solutions salines aqueuses, les eutectiques sel-eau, les hydrates de sel, les mélanges entre des hydrates de sel, des sels et des mélanges eutectiques de sels, les hydroxydes de métaux alcalins ainsi que les mélanges entre des sels et des hydroxydes de métaux alcalins.

5. Procédé de fabrication de réservoirs de chaleur contenant des mélanges selon la revendication 1, **caractérisé en ce que** l'on mélange du graphite expansé et un matériau à changement de phase et l'on met en forme ledit mélange sous pression pour obtenir un corps moulé.

6. Procédé selon la revendication 5, **caractérisé en ce que** le processus de mélange, consistant à mélanger du graphite expansé et un matériau à changement de phase, est mis en oeuvre en mélangeant les constituants sous forme de poudres.

7. Procédé selon la revendication 5, **caractérisé en ce que** le processus de mélange est mis en oeuvre en faisant fondre le matériau à changement de phase puis en introduisant du graphite expansé dans le bain de fusion ainsi obtenu.

8. Procédé selon la revendication 5, **caractérisé en ce que** l'on obtient, par extrusion, vibromoulage ou par moulage par injection, des corps moulés ayant une conductivité thermique anisotrope.
